# EUROPÄISCHE PATENTANMELDUNG

(11) **EP 1 020 359 A2**
(43) Veröffentlichungstag der Anmeldung: **19.07.2000**
(21) Anmeldenummer: 00100025.6
(22) Anmeldetag: 04.01.2000
(51) Int. Cl.: B65B 35/58

(54) **Vorrichtung zum Transportieren und gleichzeitigen Drehen von Gegenständen, insbesondere von Faltschachteln**

(30) Priorität: 14.01.1999 DE 19901236
(71) Anmelder: Seidel, Helmut, 65396 Walluf (DE)
(72) Erfinder: Seidel, Helmut, 65396 Walluf (DE); Jaksch, Bruno, 65205 Wiesbaden (DE)
(74) Vertreter: Quermann, Helmut, Dipl.-Ing.

(57) **Zusammenfassung**

Die Erfindung betrifft eine Vorrichtung zum Transportieren und gleichzeitigen Drehen von Gegenständen, insbesondere von Faltschachteln (19) um ihre vertikale Achse, insbesondere zum Drehen von Gegenständen um 90°. Die Vorrichtung weist eine Transporteinrichtung (33) zum Fördern der Gegenstände auf, wobei die Gegenstände von einer Dreheinrichtung erfaßt und gedreht werden. Die Dreheinrichtung weist mehrere relativ zu den Gegenständen zustellbare, in Kontakt mit diesen gelangende Elemente (61) sowie Stellmittel (54, 55, 56) zum Drehen dieser Elemente auf. Die Elemente sind in einem umlaufenden Förderer (38, 39) gelagert.

Erfindungsgemäß wird vorgeschlagen, daß der umlaufende Förderer oberhalb der Transporteinrichtung (33) und der Gegenstände (19) sowie horizontal angeordnet ist. Diese Gestaltung ermöglicht es insbesondere, daß die Vorrichtung gut zugänglich ist und baulich einfach gestaltet werden kann.

## Beschreibung

Die Erfindung betrifft eine Vorrichtung zum Transportieren und gleichzeitigen Drehen von Gegenständen, insbesondere von Faltschachteln, um eine vertikale Achse, insbesondere zum Drehen der Gegenstände um 90°, mit einer Transporteinrichtung zum Fördern der Gegenstände, auf der die Gegenstände aufstehen, dabei von einer Dreheinrichtung erfaßt und gedreht werden, wobei die Dreheinrichtung mehrere relativ zu den Gegenständen zustellbare, in Kontakt mit diesen gelangende Elemente sowie Stellmittel zum Drehen dieser Elemente aufweist, wobei ferner Stellmittel zum Drehen dieser Elemente aufweist, wobei ferner die Elemente in einem umlaufenden Förderer gelagert sind.

Eine derartige Vorrichtung ist aus der EP 0.266.644 B1 bekannt. Sie dient dem automatischen Verpacken von Waren in Faltschachteln, beispielsweise dem Verpacken von Pizzen.

Um das Formen, Füllen und Schließen einer Faltschachtel in einem kontinuierlichen und darüberhinaus automatischen Vorgang durchzuführen, ist man bestrebt, so möglichst viele Schritte zum Erreichen dieses Ziels von der Seite der Verpackungsmaschine durchzuführen. Die weitgehend gefaltete Schachtel, die den Gegenstand bereits aufnimmt, ist dann nur noch im Bereich ihrer Stirnseiten zu verschließen. Hierfür ist es aber notwendig, die Faltschachtel vor dem stirnseitigen Verschließen um 90° zu drehen, damit die Verschließvorgänge von den Seiten der Verpackungsmaschine aus erfolgen können. Um den kontinuierlichen Prozeß zu gewährleisten, werden die Faltschachteln beim Drehen um ihre vertikale Achse weiter transportiert, dies erfolgt durch die der Drehbewegung der Dreheinrichtung überlagerte geradlinige Bewegung der Dreheinrichtung mittels des umlaufenden Förderers.

In der genannten Schrift ist der umlaufende Förderer horizontal beweglich und befindet sich unterhalb der transportierten Gegenstände. Die in Kontakt mit den Gegenständen gelangenden Elemente sind als Auflageteller ausgebildet, die von unten gegen die Gegenstände bewegt werden. Die Drehbewegung der Auflageteller, die um 90° erfolgt, wird über eine Kulissenführung bewirkt. In dieser Schrift wird auch vorgeschlagen, oberhalb des umlaufenden Förderers einen weiteren Förderer anzuordnen, der gleichfalls Auflageteller aufnimmt. Diese tangieren von oben her die Oberseite der Faltschachteln und bilden damit eine Begrenzung, die verhindert, daß beim Drehen der Faltschachteln mittels der unteren Auflageteller eine unvorhergesehene Verschiebung der Faltschachteln auf den unteren Auflagetellern stattfinden kann. Die oberen Auflageteller sind nicht höhenverstellbar und es ist der obere Förderer gleichfalls horizontal angeordnet.

Nachteilig ist bei der bekannten Vorrichtung, daß die Dreheinrichtung und der dieser zugeordnete umlaufende Förderer unterhalb der zu transportierenden Gegenstände angeordnet ist. Alle für das Transportieren und Drehen der Gegenstände erforderlichen Bauteile müssen damit unterhalb der Förderebene der Gegenstände installiert werden. Dies ist wegen des nicht unbegrenzt zur Verfügung stehenden Raumes nur mit erheblichen Schwierigkeiten möglich. Zu berücksichtigen ist überdies, daß auch die Transporteinrichtung zum Fördern der Gegenstände, auf der die Gegenstände somit in aller Regel unter ihrem Eigengewicht gefördert werden, in diesem Bereich unterzubringen ist. Die vertikale Anordnung des umlaufenden Förderers bedingt wegen der beiden Umlenkbereiche des Förderers eine erhebliche Bauhöhe, die damit das Förderniveau der Transporteinrichtung beeinflußt. Des weiteren sind bei der bekannten Vorrichtung nur Auflageteller vorgesehen, die damit nicht geeignet sind, die Gegenstände sicher zu halten. Um diesen Nachteil zu eliminieren, ist der weitere, obere Förderer vorgesehen, so daß jeder Gegenstand zwischen zwei Auflagetellern gehalten ist. Im übrigen werden die Gegenstände, auch im Bereich der Dreheinrichtung, immer auf dem Niveau der Transporteinrichtung gefördert, somit beim Drehen nicht von der Transporteinrichtung abgehoben.

Aus der DE 38 17 543 A1 ist eine Maschine zum Behandeln von Gegenständen mit einer Behandlungsflüssigkeit bekannt. Bei dieser ist eine Transporteinrichtung in Form eines Endlosgliederbandes vorgesehen, welche zu ätzende Werkstücke kontinuierlich durch die verschiedenen Behandlungszonen der Maschine hindurch befördert. Das Endlosgliederband trägt in regelmäßigen Abständen Tragteller, auf welche die Werkstücke aufgesteckt sind. Die Tragteller können während ihrer Bewegung durch die Maschine hindurch in Drehung um ihre eigene Achse versetzt werden. Auf diese Weise werden die auf den Tragtellern aufgesteckten Werkstücke von den Düsenstöcken, die Teil der Maschine sind, allseits derart besprüht, daß alle Winkel und Ecken zuverlässig erreicht werden und eine Schattenbildung vermieden wird.

Es ist Aufgabe der vorliegenden Erfindung, eine Vorrichtung der eingangs genannten Art so weiterzubilden, daß sie besonders gut zugänglich und baulich einfach gestaltet ist.

Gelöst wird die Aufgabe bei einer Vorrichtung der eingangs genannten Art dadurch, daß der umlaufende Förderer oberhalb der Transporteinrichtung und der Gegenstände sowie horizontal angeordnet ist.

Durch die Anordnung des umlaufenden Förderers oberhalb der Transporteinrichtung und der Gegenstände wird erreicht, daß oben ausreichend Platz zur Installation des umlaufenden Förderers besteht. Dessen ungeachtet baut der umlaufende Förderer nicht in die Höhe, sondern in die Breite, da er horizontal angeordnet ist. Die einzelnen Elemente des umlaufenden Förderers sind infolgedessen gut zugänglich, so daß Einstell- bzw. Umbauvorgänge auf einfache Art und Weise vorgenommen werden können. Abgesehen hiervon sind die Dreheinrichtung und der umlaufende Förderer an einem anderen Ort plaziert als die Transporteinrichtung zum Fördern der Gegenstände. Durch die Entzerrung der Baueinheiten ist sichergestellt, daß die Transporteinrichtung zum Fördern der Gegenstände gut zugänglich ist. Die einzelnen Bauteile können damit unabhängig voneinander konstruktiv optimiert werden. Es ist keine Rücksicht auf das Zusammenwirken mit den anderen Bauteilen zu nehmen.

Gemäß einer besonderen Ausführungsform der Erfindung ist vorgesehen, daß die Elemente als Saugelemente ausgebildet sind, wobei insbesondere ein Paar Saugelemente mit dem jeweiligen Gegenstand in Wirkverbindung bringbar ist. Die Saugelemente werden von oben auf den Gegenstand abgesenkt und dieser vorzugsweise geringfügig angehoben und erst dann gedreht. Um die Haltekräfte optimal in den Gegenstand einleiten zu können, ist pro Gegenstand in aller Regel ein Saugelementpaar vorgesehen und diese Saugelemente ergreifen außerhalb des Schwerpunktes des Gegenstandes, wobei das vom Gegenstand aufgenommene Produkt mit berücksichtigt ist, den Gegenstand, so daß Kippmomenten und Beschleunigungskräften weitgehend entgegengewirkt werden kann. Es sollte allerdings sichergestellt sein, daß die Achse, um die die Saugelemente des Saugelementpaares geschwenkt werden, im wesentlichen mit dem Schwerpunkt des Gegenstandes unter Berücksichtigung des von diesem aufgenommenen Produktes übereinstimmt.
Besonders einfach können die Elemente, insbesondere Saugelemente mittels einer stationären Kulissenführung hin- und herbewegt werden, um die gewünschte Drehung der Gegenstände um deren vertikale Achse zu erzielen. Bei dieser Drehung handelt es sich insbesondere um eine 90° Drehung, die berücksichtigt, daß bei Gegenständen in Form von Faltschachteln diese im wesentlichen quaderförmig ausgebildet sind. Das Heben und Senken der Elemente zum Zwecke der Herstellung der Saugverbindung zwischen den Elementen und den Gegenständen sowie deren Anheben erfolgt vorzugsweise mittels einer stationären Kulissenführung.

Gemäß einer besonderen Gestaltung ist vorgesehen, daß die Dreheinrichtung und der umlaufende Förderer in einem gemeinsamen Gestell gelagert sind. Dies ermöglicht eine einfache Umrüstung von Dreheinrichtung und Förderer, so daß Gegenstände unterschiedlicher Dicke transportiert und gedreht werden können,wobei die Umrüstung innerhalb kürzester Zeit erfolgen kann. Um anstelle einer Faltschachtel, die eine Pizza aufnimmt, nunmehr eine höhere Faltschachtel, die beispielsweise drei übereinander gestapelte Pizzen aufnimmt, zu handhaben, ist es nur erforderlich, das gemeinsame Gestell der Dreheinrichtung und des umlaufenden Förderers anzuheben. Die Vorrichtung kann dann, ohne daß weitere Änderungen erforderlich sind, betrieben werden, da es nur darauf ankommt, die Dreheinrichtung und den umlaufenden Förderer relativ zur Tansporteinrichtung zum Fördern der Gegenstände in der Höhe zu verstellen.

Gemäß einer besonderen Ausführungsform der Erfindung ist vorgesehen, daß mittels Druckluft im Bereich jedes Saugelementes bzw. jedes Saugelementpaares der Saugunterdruck erzeugt wird, insbesondere mittels einer Injektordüse. Diese Gestaltung, nämlich Umsetzung von Druckluft, somit Luft unter Überdruck in Saugluft ist insbesondere dann von Vorteil, wenn eine zentrale Luftversorgung für die Saugelemente bzw. Saugluftpaare vorgesehen ist, wobei ein Saugelement bzw. ein Saugelementpaar mit der zentralen Luftversorgung verbunden ist und von diesem Saugelement bzw. Saugelementpaar die Luftversorgung der anderen Saugelemente bzw. Saugelementpaare hintereinandergeschaltet ist. So könnte für den Fall, daß eine zentrale Druckluftversorgung vorgesehen ist, der Fall eintreten, daß im Bereich der Luftversorgung der anderen, hintereinandergeschalteten Saugelemente bzw. Saugelementpaare ein Leck entsteht. Dies hätte zur Folge, daß der Unterdruck nicht aufrechterhalten werden könnte und damit alle Saugelemente bzw. Saugelementpaare in Strömungsrichtung hinter dem defekten Saugelement bzw. Saugelementpaar nicht funktionieren mit der Konsequenz, daß dort die Gegenstände nicht gehandhabt werden können. Bei Druckluft hingegen führt eine Leckage, wobei es sich in aller Regel um eine geringfügige Leckage handelt, nicht zu einem nennenswerten Absinken des Luftdrucks. Auch ein geringfügig abgesunkener Druck der Luft reicht aus, mittels der im Bereich jedes Saugelementes bzw. jedes Saugelementpaares angeordneten Injektordüse einen Saugunterdruck zu erzeugen, der gewährleistet, daß der jeweilige Gegenstand einwandfrei gehandhabt werden kann.

Ein besonderes Problem stellt die Zuführung der Luft, sei es Druckluft oder Saugluft, zu den einzelnen Saugelementen bzw. Saugelementpaaren dar. Eine baulich besonders einfache und insbesondere zweckmäßige Gestaltung sieht vor, daß die zentrale Luftversorgung ein Koppelelement aufweist, das hin- und herbewegbar ist, insbesondere in der Bewegungshauptrichtung der Saugelemente bzw. Saugelementpaare hin- und herbewegbar ist, wobei eine Luftleitung das Koppelelement mit dem der zentralen Luftversorgung zugeordneten Saugelement bzw. Saugelementpaar sowie der Luftquelle verbindet. Bei dieser Lösung ist somit vorgesehen, der translatorischen, bogenförmigen, translatorischen und wieder bogenförmigen Bewegung der Saugelemente bzw. Saugelementpaare aufgrund der Bewegung des umlaufenden Förderers eine translatorische Bewegung des Koppelelements in Bezug zu setzen, wobei die Bewegungsrichtung von Koppelelement und translatorischem Bereich des umlaufenden Förderers im wesentlichen übereinstimmen sollte. Die Luftleitung ist zweckmäßig als flexibler Schlauch ausgebildet, dies gilt im übrigen auch für die die einzelnen Saugelemente bzw. Saugelementpaare im Wege der Hintereinanderschaltung verbindenden Luftleitungen. Das Koppelelement ist vorteilhaft in einer Schiene frei verschieblich gelagert und über eine Stange mit einem Aufnahmeelement für das der zentralen Luftversorgung zugeordnete Saugelement bzw. Saugelementpaar verbunden. Über die Stange besteht eine gelenkige Verbindung zwischen Koppelelement und Aufnahmeelement. Alle Saugelemente bzw. Saugelementpaare sollten im übrigen mit identisch gestalteten Aufnahmeelementen verbunden sein. Dies bedingt einen minimalen Bauaufwand infolge geringer Teilevielfalt.

Gemäß einer baulich besonders vorteilhaften Gestaltung ist vorgesehen, daß der Förderer als umlaufende Doppelkette ausgebildet ist, wobei die beiden Ketten übereinander angeordnet sind und diese in Förderrichtung gesehen in gleichem Abstand angeordnete Aufnahmeelemente für die Saugelemente bzw. das Saugelementpaare aufnehmen. Die Aufnahmeelemente sind fest mit den Ketten verbunden und können alle notwendigen Bauteile zum Absenken der Saugelemente bzw. Saugelementpaare sowie zu deren Drehung aufnehmen. Die Aufnahmeelemente nehmen ferner die Aggregate auf, die der Luftführung dienen, beispielsweise die jeweilige Injektordüse.

Beim Drehen des Gegenstandes, konkret der Faltschachtel, die stirnseitig noch offen ist, kann nicht ausgeschlossen werden, daß das vom Gegenstand aufgenommene Produkt in diesem verschoben wird. Dies betrifft nicht nur die vorstehend angesprochenen Pizzen, somit im wesentlichen ihrer Form nicht veränderliche Produkte, sondern beispielsweise auch in Beuteln abgepackte Produkte, wie Cornflakes, Zucker usw. Um diese Produkte, insbesondere in Beuteln abgepackte Produkte, bezüglich des Gegenstandes, konkret der Faltschachtel, auszurichten, ist eine Einrichtung zum Nachzentrieren vorgesehen. Die Anwendung der Einrichtung ist nicht darauf beschränkt, daß zuvor die Drehung des Gegenstandes erfolgt ist, sie kann vielmehr unabhängig hiervon vorgesehen sein, beispielsweise um grundsätzlich in Beuteln abgepackte und von Faltschachteln aufgenommene Produkte, die formveränderlich sind und deshalb durchaus aus den Faltschachteln herausragen können, vollständig in diese hineinzudrücken. Die Einrichtung zum Nachzentrieren weist bevorzugt zwei Zentrierelemente auf, die auf den entgegengesetzten Seiten des dort offenen Gegenstandes in diesen einführbar sind. Vorzugsweise erfolgt das Nachzentrieren des Produktes während der Förderung des Produktes und damit des Gegenstandes. Bewerkstelligt werden kann dies beispielsweise durch in parallelen Lenkern gelagerte Druckstücke, deren jeweiliger Querschnitt im wesentlichen dem lichten Querschnitt des Gegenstandes bzw. der Faltschachtel entspricht und die beim Fördern des Gegenstandes in diesen teilweise hineinbewegt und anschließend aus diesem wieder herausbewegt werden.

Weitere Merkmale der Erfindung sind in den Patentansprüchen, der Beschreibung der Figuren und den Figuren selbst dargestellt, wobei bemerkt wird, daß alle Merkmale und Einzelmerkmale erfindungswesentlich sind.

In den Figuren ist die Erfindung anhand eines Ausführungsbeispieles veranschaulicht, ohne hierauf beschränkt zu sein. Es zeigt:
- Figur 1: eine Seitenansicht einer Verpackungsmaschine, die die erfindungsgemäße Vorrichtung zum Transportieren und gleichzeitigen Drehen von Gegenständen, vorliegend Faltschachteln, aufweist,
- Figur 2: eine Draufsicht der in Figur 1 gezeigten Verpackungsmaschine, wobei Bestandteile der Maschine nur teilweise gezeigt sind,
- Figur 3: eine bis auf die Stirnseiten gefaltete Faltschachtel in einer Draufsicht,
- Figur 4: die Faltschachtel gemäß Figur 3 in einer um eine vertikale Achse um einen Winkel von etwa 45° gedrehten Stellung,
- Figur 5: die Faltschachtel, veranschaulicht mit innen liegendem Produkt, in einer Schnittdarstellung, nach erfolgter Drehung um 90°, vor dem Einsatz einer Einrichtung zum Nachzentrieren,
- Figur 6: die Anordnung gemäß Figur 5 nach Abschluß des Nachzentriervorganges,
- Figur 7: einen Ausschnitt VII in Figur 1 in größerem Maßstab zur Veranschaulichung der erfindungsgemäßen Vorrichtung,
- Figur 8: einen Schnitt durch die Vorrichtung etwa bei Linie VIII-VIII in Figur 7,
- Figur 9: schematisch eine Draufsicht auf die erfindungsgemäße Vorrichtung zur Veranschaulichung der Bauteile, die die Drehung der Saugelementpaare bewirken,
- Figur 10: in schematischer Darstellung eine Draufsicht der erfindungsgemäßen Vorrichtung mit den Bauteilen, die die Luftzuführung zu den Saugelementpaaren bewirken,
- Figur 11: einen vertikalen Schnitt durch die erfindungsgemäße Vorrichtung im Bereich eines Saugelementpaares.

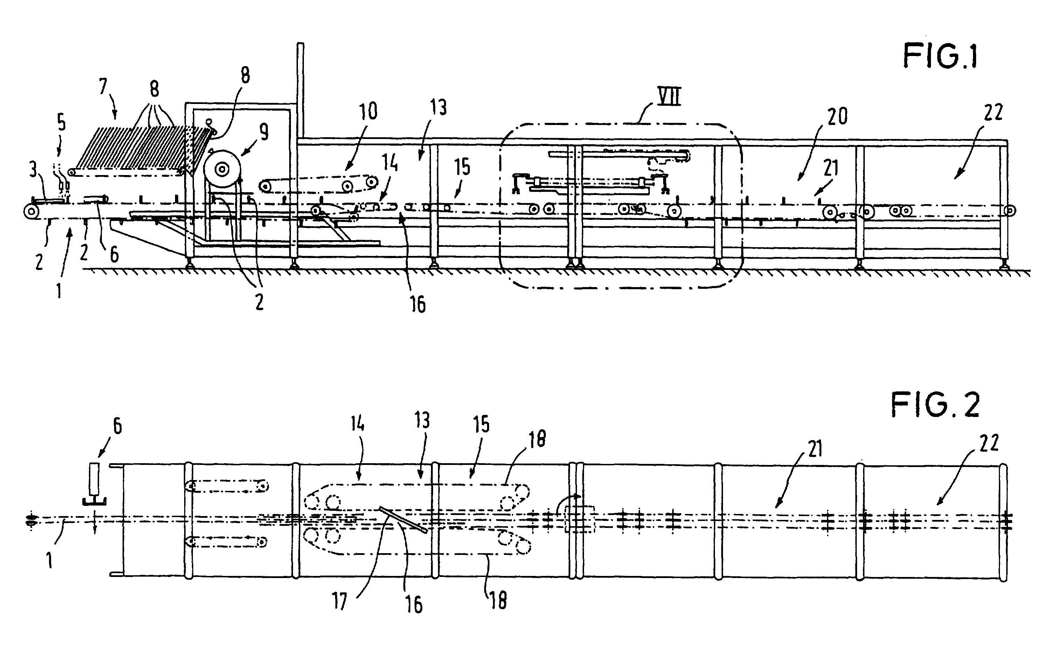

In den Figuren 1 und 2 sind die wesentlichen Bestandteile der Verpackungsmaschine stark vereinfacht verdeutlicht. Die Verpackungsmaschine weist eine Einlaufdoppelkette 1 mit Mitnehmern 2 auf, die zwischen parallel zueinander angeordneten Lagerschienen hindurchgreifen, auf denen Pizzen 3 aufliegen. Mittels zweier ein Paar bildender Mitnehmer 2 wird die jeweilige Pizza 3 in Förderrichtung 4 verschoben. Eine Höhenüberwachung 5 erfaßt die Höhe der jeweiligen Pizza und wirkt mit einer Ausschleusung 6 zusammen, die zu hohe Pizzen ausschleust. Oberhalb der Einlaufdoppelkette 1 ist ein Magazin 7 angeordnet, das eine Vielzahl von ebenen Zuschnitten 8 aufnimmt. Ein Rotationsableger 9 nimmt über nicht näher bezifferte Saugeinrichtungen jeweils den vorderen Zuschnitt 8 aus dem Magazin 7 und legt diesen auf nicht näher gezeigten seitlichen Führungen ab. Die Bewegung des Rotationsablegers 9 und der Einlaufdoppelkette 1 ist so synchronisiert, daß, wie in der Darstellung der Figur 1 zu entnehmen ist, der jeweils abgelegte Zuschnitt 8 benachbarte Trennstege 2 der Einlaufdoppelkette 1 geringfügig überdeckt. Der Zuschnitt 8 wird quer zu seiner Förderrichtung auf die seitlichen Führungen abgelegt und befindet sich in geringem Abstand zur darunter befindlichen Pizza 3. Gefördert wird der jeweilige Zuschnitt 8 mittels eines oberhalb von diesem angeordneten Rundriemenförderers 10. Im Bereich des Rundriemenförderers 10 sind seitlich der Doppelkette 1 nicht gezeigte Einrichtungen vorgesehen, die den jeweiligen Zuschnitt 8 in eine vorgefaltete Position überführen, in der die Seitenwandabschnitte und ein der Verklebung dienender Laschenabschnitt aus deren Ursprungsebene um 90° aufeinanderzugefaltet werden. Im Anschluß an die Einlaufdoppelkette 1 ist eine weitere Fördervorrichtung 13 für die Pizzen 3 vorgesehen, die einen hinteren Förderabschnitt 14 sowie einen vorderen Förderabschnitt 15 aufweist, zwischen denen ein Zwischenraum 16 angeordnet ist. In diesem ist ein Schwert 17 angeordnet, das die Aufgabe hat, den vorgefalteten Verpackungszuschnitt weiter zu falten. Im Bereich dieser Fördervorrichtung 13 wird der jeweilige Zuschnitt 8 nicht mehr mittels des Rundriemenförderers 10 gefördert, sondern es sind dort seitliche Fördervorrichtungen 18 mit Mitnehmern vorgesehen, die den Zuschnitt seitlich fassen. Der Bodenabschnitt des Zuschnitts wird im Bereich desSchwerts 17 nach oben unter die Pizza 3 gefaltet, wo er mit dem Laschenabschnitt verklebt wird. Aufgrund dieses Wrap-Around-Verfahrens befindet sich die Pizza 3 innerhalb der teilweise gefalteten Faltschachtel, die nur noch im Bereich ihrer beiden Stirnseiten offen ist. Um diese zu schließen, wird die Faltschachtel 19 der erfindungsgemäßen Vorrichtung zum Transportieren und gleichzeitigen Drehen der Faltschachteln zugeführt, die in Figur 1 durch den Ausschnitt VII verdeutlicht ist. Nach dem Drehen der jeweiligen Faltschachtel 19 um eine horizontale Achse um 90° können im nachfolgenden Bereich 20 der Verpackungsmaschine, die eine Auslaufdoppelkette 21 aufweist, die Stirnseiten der Verpackung geschlossen werden. Es schließt sich ein Austragsförderer 22 an, der die verpackten Pizzen aus der Verpackungsmaschine fördert.

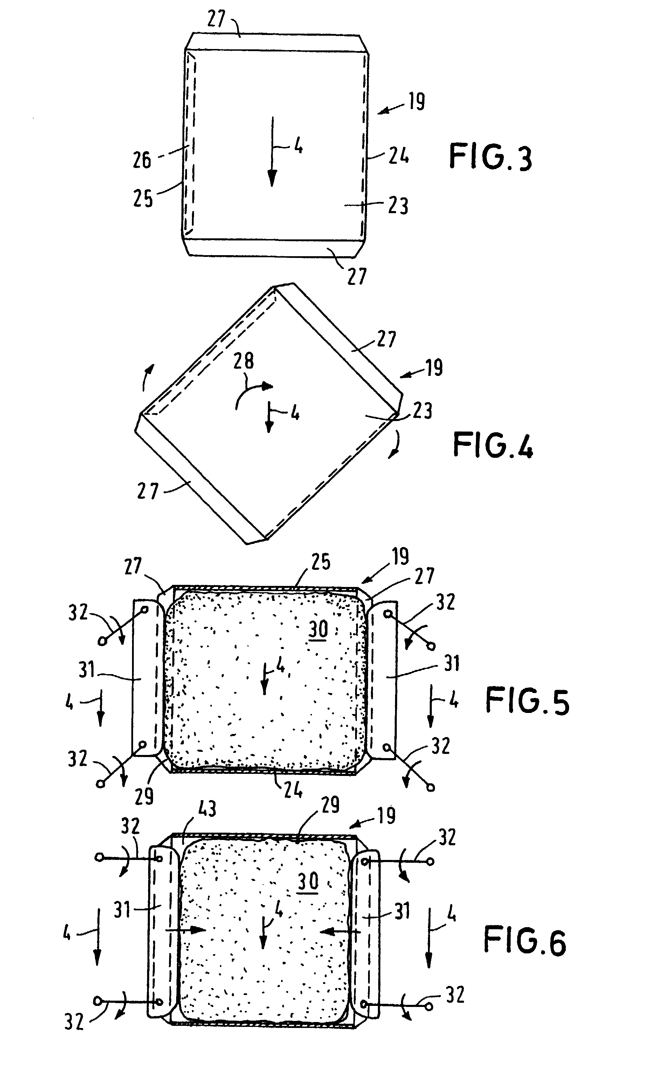

Figur 3 zeigt die teilweise gefaltete Faltschachtel 19 vor der Drehung. Die Faltschachtel 19 weist einen Deckelabschnitt 23 und einen Bodenabschnitt 43 auf, die eine entsprechende quadratische Form aufweisen und mittels eines rechteckigen Seitenwandabschnittes 24 verbunden sind. Auf der dem Seitenwandabschnitt 24 abgewandten Seite weist der Deckelabschnitt 23 einen weiteren entsprechenden Seitenwandabschnitt 25, mit dem der Lappenabschnitt 26 verbunden ist, der mit dem Bodenabschnitt verklebt ist. Nicht sichtbar sind in der Figur 3 Staublaschen, die stirnseitig mit den Seitenwandabschnitten 24 und 25 verbunden sind. In Bezug auf die Förderrichtung 4 der Faltschachtel 19 sind sowohl auf der Vorlauf- als auch auf der Nachlaufseite der Schachtel mit dem Bodenabschnitt und dem Deckelabschnitt 23 Stirnwandabschnitte 27 verbunden. Diese sind noch nicht gefaltet und befinden sich damit in einer Ebene mit dem Deckelabschnitt 23 bzw. dem Bodenabschnitt 43.

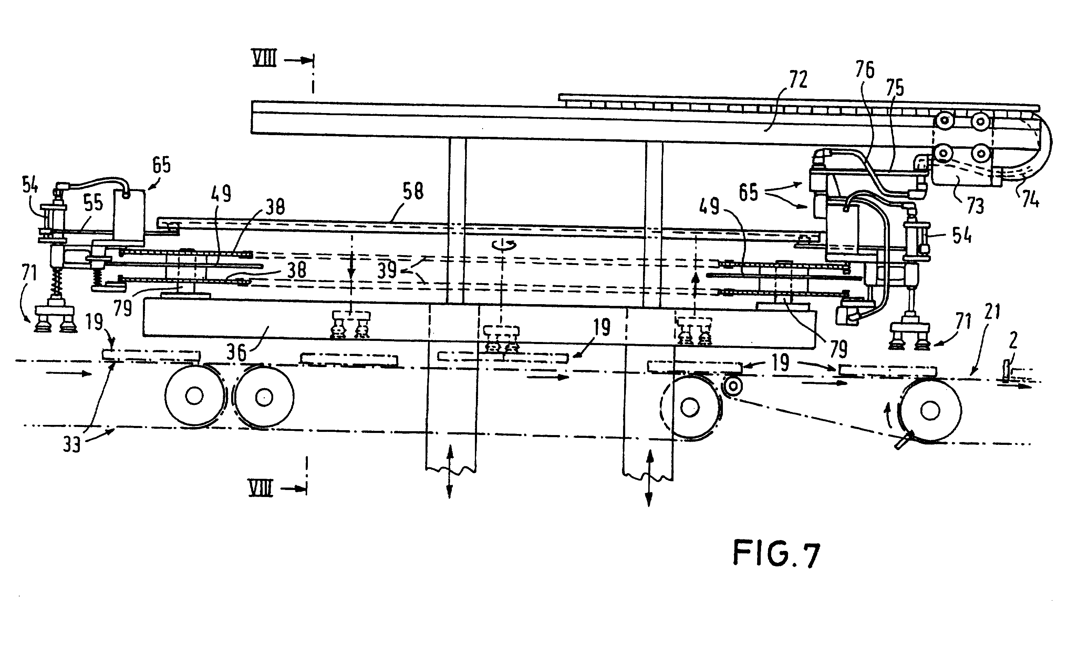

Bei der erfindungsgemäßen Vorrichtung zum Transportieren und gleichzeitigen Drehen der Faltschachtel 19 wird diese, ausgehend von der Position nach Figur 3 in Richtung des Pfeiles 4 weitergefördert und dabei in Richtung des Pfeiles 28 um 90° gedreht, so daß die stirnwandseitig offene Faltschachtel 19 die in Figur 5 gezeigte Position einnimmt. In dieser Figur und der Figur 6 ist allerdings der Fall veranschaulicht, daß die Faltschachtel 19 statt einer Pizza 3 einen Beutel 29 mit Cornflakes 30 aufnimmt. Ist der Beutel 29 entsprechend flach gedrückt, bedeutet dies, daß er sich in Richtung auf die Stirnseiten der Faltschachtel 19 ausdehnt, so daß er unter Umständen dort aus der Faltschachtel herausragt, wie es in Figur 5 gezeigt ist. Um den Beutel 29 in der Faltschachtel 19 zu zentrieren, werden während des Transportes der Faltschachtel 19 in Förderrichtung 4 Zentrierbacken 31, die in parallelen Lenkern 32 schwenkbar gelagert sind, synchron gegen die Stirnseiten der Beutel 29 geschwenkt und drücken diesen vollständig in die Faltschachtel 19, wie es der Darstellung der Figur 6 zu entnehmen ist.Beim weiteren Transportieren der Faltschachtel 19 in Förderrichtung 4 schwenken die Zentrierbacken wieder aus den stirnseitigen Bereichen der Faltschachtel 19. Dieses Zentrieren der Beutel 29 erfolgt wegen der optimalen seitlichen Zugänglichkeit der stirnseitigen Öffnungen der Faltschachtel 19, nachdem die Faltschachtel 19 um 90° gedreht worden ist. Die Lager, die die Lenker 32 für die Zentrierbacken 31 aufnehmen, können dabei, der Schwenkbewegung der Lenker 32 überlagert, in Förderrichtung 4 hin-und herbewegt werden.

Für die nachfolgenden Ausführungen ist es unerheblich, welches Produkt von der Faltschachtel aufgenommen wird, insbesondere ob es sich um eine Pizza, mehrere Pizzen oder um einen Beutel handelt, der ein nicht formveränderliches oder aber formveränderliches Produkt aufnimmt.

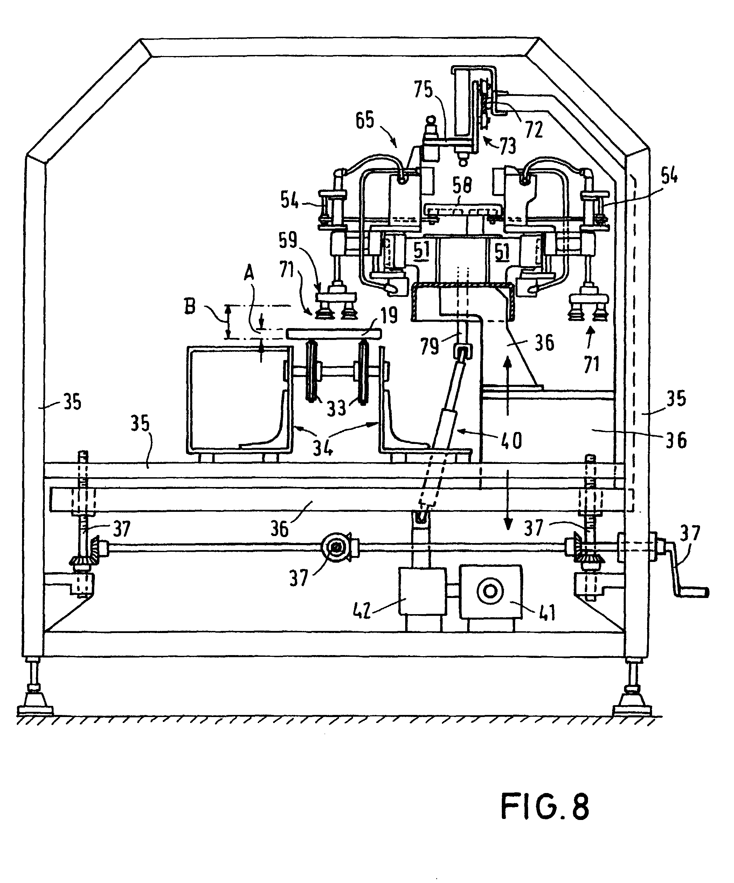

Die Figuren 7 bis 11 zeigen den Aufbau und die Wirkungsweise der erfindungsgemäßen Vorrichtung zum Transportieren und gleichzeitigen Drehen der Faltschachtel 19. Mittels einer Transporteinrichtung, beispielsweise mehrerer Rundriemenförderer 33, werden die mit den Produkten beladenen Faltschachteln 19 in den Bereich der erfindungsgemäßen Vorrichtung gefördert. Die Rundriemenförderer 33 sind über Lagerelemente 34 stationär im Rahmen 35 der Verpackungsmaschine gelagert. In diesem sind vertikal verstellbar Lagerelemente 36 gehalten, die die erfindungsgemäße Vorrichtung zum Transportieren und gleichzeitigen Drehen aufnehmen. Die Höhenverstellung der Lagerelemente 36 erfolgt mittels eines Spindelantriebs 37. Die Lagerelemente 36 nehmen in Förderrichtung der Faltschachteln 19 beabstandet zueinander zwei vertikale Lagerwellen 79 auf, mit denen Zahnräder 38 verbunden sind, auf denen Doppelketten 39 laufen. Eine der Lagerwellen 79 ist angetrieben. Hierzu ist eine kardanische Verbindung 40 zu einer Antriebseinheit vorgesehen, die einen Elektromotor 41 und ein Übersetzungsgetriebe 42 aufweist. Der Elektromotor 41 treibt vorzugsweise weitere Aggregate der Verpackungsmaschine an. Damit die erfindungsgemäße Vorrichtung zum Transportieren und gleichzeitigen Drehen in der Höhe verstellt werden kann, ist die kardanische Verbindung 40 längenveränderlich ausgeführt. Die Höhenverstellung der Vorrichtung dient dem Zweck, Faltschachteln 19 unterschiedlicher Höhe handhaben zu können, wie es in Figur 8 im Bereich der auf den Rundriemenförderern 33 aufliegenden Faltschachteln 19 durch die mittels der Pfeile wiedergegebenen Dickenangaben A und B veranschaulicht ist, die die Höhenabmessungen einer relativ niedrigen und einer relativ hohen Verpackung 19 wiedergeben.

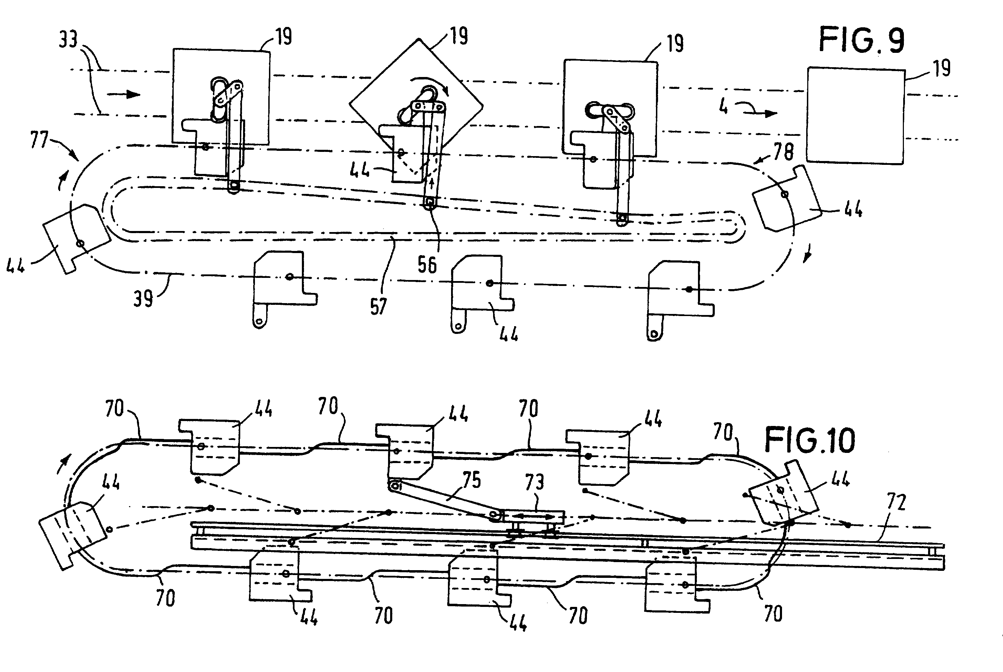

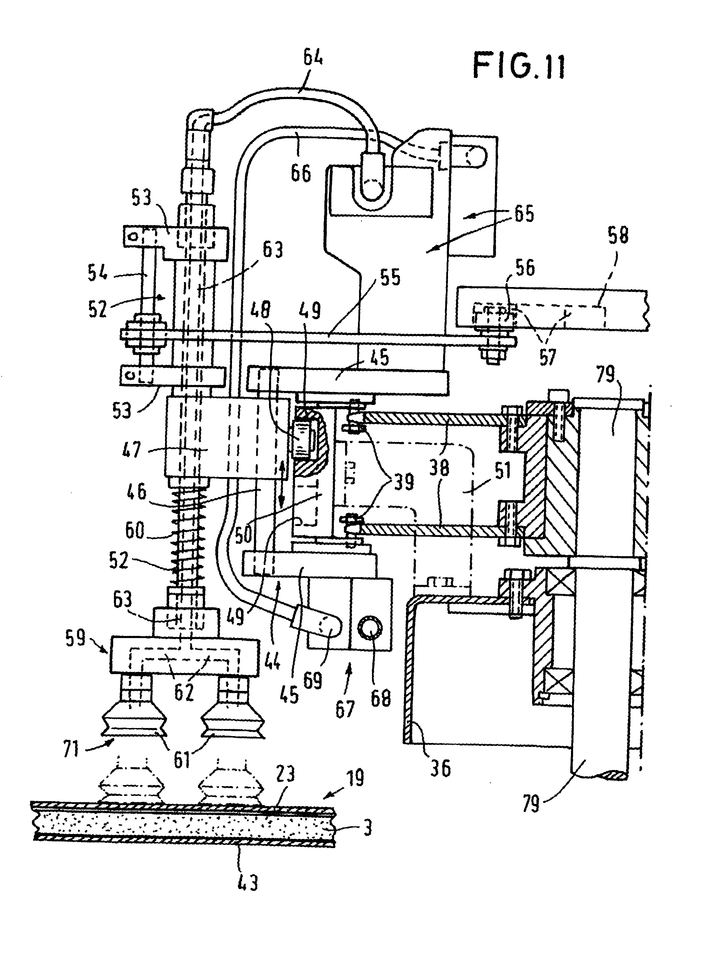

Mit den Doppelketten 29 sind acht an deren Umfang gleichmäßig verteilte Basiselemente 44 verbunden, die im wesentlichen U-förmigen Querschnitt aufweisen, so daß deren Schenkel 45 die Doppelketten 39 zwischen sich aufnehmen. Der die jeweiligen beiden Schenkel 45 verbindende Steg 46 des Basiselementes 44 dient der vertikalen Führung eines Lagerblocks 47, der mit einer Rolle 48 versehen ist. Diese läuft in einer Führungsnut 49 einer horizontal angeordneten Führungsschiene 50, die über ein Winkelelement 51 am Lagerelement 36 angeschraubt ist. Die Führungsnut 49 ist in der Vertikalen gekrümmt ausgebildet derart, daß sie in einem Einlaufbereich der Führungsnut 49 über die Rolle 48 den Lagerblock 47 zunächst absenkt und in einem Auslaufbereich der Führungsnut 49 die Rolle 48 den Lagerblock 47 wieder anhebt. Sowohl die obere Position als auch die untere Position der Führungsnut 49 ist in Figur 11 veranschaulicht. Im Lagerblock 47 ist axial unverschieblich, aber schwenkbar ein vertikal angeordnetes Rohr 52 gelagert. Mit diesem sind oberhalb des Lagerblocks 47 zwei gleichgerichtete, im Abstand zueinander angeordnete Schenkel 53 verbunden, die zwischen sich eine vertikale Führungsstange 54 aufnehmen. In dieser ist ein Ende eines Hebels 55 schwenkbar und vertikal verschiebbar gelagert. Das andere Ende des Hebels 55 nimmt eine Rolle 56 auf, die mit einer Kulissenführung 57 zusammenwirkt. Diese ist in ein stationäres Kulissenelement 58 eingearbeitet, wobei, wie der Darstellung in Figur 9 zu entnehmen ist, die Kulissenführung 57 als geschlossene Kurve ausgebildet ist. Die Kulissenführung ist so gestaltet, daß sie beim Bewegen des Lagerblocks 47 oberhalb der Rundriemenförderer 33 eine Schwenkbewegung der Schenkel 53 um 90° bedingt, woraus, wie nachfolgend beschrieben wird, die Drehung der Faltschachtel 19 um 90° bezüglich ihrer vertikalen Achse resultiert. Beim anschließenden Rücklauf des Lagerblocks 47 wird die 90° Schwenkbewegung aufgrund der Gestaltung der Kulissenführung 57 im dortigen Bereich wieder rückgängig gemacht.

Das Rohr 52 nimmt im Bereich seines unteren Endes eine Lagerplatte 59 auf, die drehfest mit dem Rohr 52 verbunden ist, aber entgegen der Kraft einer das Rohr 52 umgebenden Feder 60 geringfügig in Richtung des Lagerblocks 47 verschiebbar ist. An seiner Unterseite nimmt die Lagerplatte 59 in gleichem Abstand zur Mittellängsachse des Rohrs 52 zwei Saugnäpfe 61 auf. Von diesen führen Luftkanäle 62 in der Lagerplatte 59 zu einem zentralen Luftkanal 63, der die Lagerplatte 59 und das Rohr 52 durchsetzt.Mit dem oberen Ende des Rohres 52 ist ein Luftschlauch 64 verbunden, der zu einer Injektordüse 65 führt. Mit deren Eingang ist ein weiterer Luftschlauch 66 verbunden, der zu einem mit dem Schenkel 45 des Basiselementes 44 verbundenen Anschlußstück 67 führt. Die Luftzuführung in das Anschlußstück 67 erfolgt im Bereich des Anschlusses 68, während über den Anschluß 69, der mit Anschluß 68 in Strömungsverbindung steht, die Luft über einen Luftschlauch 70 zum Anschlußstück 67 des benachbarten Basiselementes 44 führt.

Figur 10 veranschaulicht die zentrale Luftzuführung zu einem der diversen Saugelementpaare 71, wobei von dem dem konkreten Saugelementpaar 71 zugeordneten Anschlußstück 67 die Luft den hintereinandergeschalteten Anschlußstücken 67 der anderen Saugelementpaare 78 weitergeleitet wird, wie es durch die Luftschläuche 70 veranschaulicht ist. Wie insbesondere der Darstellung der Figuren 7,8 und 10 zu entnehmen ist, befindet sich oberhalb der Doppelketten 39, in Richtung der Rundriemenförderer 33 orientiert, eine stationäre Schiene 72, in der ein Koppelelement 73 verschieblich gelagert ist. Ein zentraler Luftschlauch 74 ist mit einer nicht näher gezeigten Druckluftquelle verbunden und am schlittenartigen Koppelelement 73 befestigt. Eine Stange 75 ist einerseits schwenkbar im Koppelelement 73, andererseits schwenkbar in der Injektordüse 65 des der zentralen Luftversorgung zugeordneten Saugelementpaares 71 gelagert, wobei die Stange 75 um vertikale Achsen schwenkbar ist. Die Bewegung des Koppelelementes 73 erfolgt damit in Abhängigkeit von der mittels der umlaufenden Doppelketten 39 sich ergebenden Bewegung dieser Injektordüse 65. Im Bereich der Stange 75 verbindet eine Schlauchleitung 76 den zentralen Luftschlauch 74 mit der zugeordneten Injektordüse 65. Figur 10 veranschaulicht mit ausgezogenen Linien eine Mittelstellung des Koppelelementes 73, während die hier strichpunktierten Linien den Bewegungsweg des Koppelelementes 73 sowie die Stellung der Stange 75 in den unterschiedlichen Positionen des Basiselementes 44, das der zentralen Luftversorgung zugeordnet ist, beim Umlauf der Doppelketten 39 veranschaulichen.

Die Faltschachteln 19 werden, wie der Darstellung der Figur 9 zu entnehmen ist, in einem Abstand zueinander mittels der Rundriemenförderer 33 transportiert, der dem Abstand benachbarter Saugelementpaare 71 entspricht. Gelangt die jeweilige Faltschachtel 19 in den Einlaufbereich 77 der Doppelketten 39, wird zunächst über die Kulissenführung der Rollen 48 das zugeordnete Saugelementpaar 71, wie es in Figur 11 mit strichpunktierten Linien veranschaulicht ist, auf den Deckelabschnitt 23 der Faltschachtel 19 abgesenkt. Die an der Injektordüse 65 anstehende Druckluft bewirkt in der Injektordüse 65 die Erzeugung eines Unterdruckes, der über die Leitungen 64, 63 und 62 auf die beiden Saugnäpfe 61 wirkt, so daß, wie in Figur 9 gezeigt, im Mittelbereich des Rundriemenförderers 33 die Faltschachteln 19 mit Inhalt unter Einwirkung der Saugkräfte aufgrund der Führung der Rolle 48 in der Kulisse angehoben und gleichzeitig aufgrund der Führung der Rolle 56 in der Kulissenführung 57 um 90° gedreht werden. Im Auslaufbereich 78 der Doppelketten 39 steuert die Kulissenführung den Lagerblock 47 derart, daß er wieder abgesenkt wird, womit die gedrehte Faltschachtel 19 wieder auf dem Rundriemenförderer 33 abgelegt wird. Über nicht näher veranschaulichte Steuerungsmittel, die an dieser Stelle vom Lagerblock 47 beaufschlagt werden, wir die Zuführung von Saugluft zu den Saugnäpfen 61 unterbrochen, so daß deren Verbindung zur Faltschachtel 19 gelöst wird. Anschließend werden die Saugnäpfe 61 wieder angehoben. Das Saugelementpaar 71 wird wieder im Einlaufbereich 77 gefördert und dort über nicht dargestellte Mittel die Saugluft aktiviert. Nach dem Aufsetzen der gedrehten Faltschachtel 19 auf den Rundriemenförderer 33 wird die Faltschachtel 19 von der Auslaufdoppelkette 21 übernommen, die mit Trennstegen 2 versehen ist.

## Patentansprüche

1. Vorrichtung zum Transportieren und gleichzeitigen Drehen von Gegenständen, insbesondere von Faltschachteln (19), um eine vertikale Achse, insbesondere zum Drehen von Gegenständen um 90°, mit einer Transporteinrichtung (33) zum Fördern der Gegenstände, auf der die Gegenstände aufstehen, dabei von einer Dreheinrichtung (52 - 61) erfaßt und gedreht werden, wobei die Dreheinrichtung mehrere relativ zu den Gegenständen zustellbare, in Kontakt mit diesen gelangende Elemente (61) sowie Stellmittel (52 - 57) zum Drehen dieser Elemente (61) aufweist, wobei ferner die Elemente (61) in einem umlaufenden Förderer (39, 38) gelagert sind, **dadurch gekennzeichnet, daß** der umlaufende Förderer (38, 39) oberhalb der Transporteinrichtung (33) und der Gegenstände (19) sowie horizontal angeordnet ist.

2. Vorrichtung nach Anspruch 1, dadurch gekennzeichnet, daß die Elemente als Saugelemente (61) ausgebildet sind, wobei insbesondere ein Saugelementpaar (71) mit dem jeweiligen Gegenstand (19) in Wirkverbindung bringbar ist.

3. Vorrichtung nach Anspruch 1 oder 2, dadurch gekennzeichnet, daß die Elemente (61) mittels einer stationären Kulissenführung (48, 49) heb- und senkbar sind.

4. Vorrichtung nach einem der Ansprüche 1 bis 3, dadurch gekennzeichnet, daß die Elemente (61) mittels einer stationären Kulissenführung (56, 57) hin- und herschwenkbar sind.

5. Vorrichtung nach einem der Ansprüche 1 bis 4, dadurch gekennzeichnet, daß die Dreheinrichtung (52 - 61) und der umlaufende Förderer (38, 39) in einem gemeinsamen Gestell (36) gelagert sind.

6. Vorrichtung nach einem der Ansprüche 1 bis 5, dadurch gekennzeichnet, daß die Dreheinrichtung (52 - 61) und der umlaufende Förderer (38, 39) relativ zur Transporteinrichtung (33) höhenverstellbar sind.

7. Vorrichtung nach einem der Ansprüche 2 bis 6, dadurch gekennzeichnet, daß mittels Druckluft Saugunterdruck im Bereich jedes Saugelementes (61) bzw. jedes Saugelementpaares (71) erzeugt wird, insbesondere mittels einer Injektordüse (65).

8. Vorrichtung nach einem der Ansprüche 1 bis 7, dadurch gekennzeichnet, daß eine zentrale Luftversorgung (73 - 76) für die Saugelemente (61) bzw. Saugelementpaare (71) vorgesehen ist, wobei ein Saugelement (61) bzw. ein Saugelementpaar (71) mit der zentralen Luftversorgung (73 - 76) verbunden ist und von diesem Saugelement (61) bzw. Saugelementpaar (71) die Luftversorgung der anderen Saugelemente (61) bzw. Saugelementpaare (71) hintereinandergeschaltet ist.

9. Vorrichtung nach Anspruch 8, dadurch gekennzeichnet, daß die zentrale Luftversorgung (73 - 76) ein Koppelelement (73) aufweist, das hin- und herbewegbar ist, insbesondere in der Bewegungshauptrichtung der Saugelemente (61) bzw. Saugelementpaare (71) hin- und herbewegbar ist, wobei eine Luftleitung (74, 76) das der zentralen Luftversorgung (73 - 76) zugeordnete Saugelement (61) bzw. Saugelementpaar (71) und eine Luftquelle verbindet.

10. Vorrichtung nach Anspruch 9, dadurch gekennzeichnet, daß das Koppelelement (73) in einer Schiene (72) frei verschieblich gelagert und über eine Stange (75) mit einem Aufnahmeelement (65, 44) für das der zentralen Luftversorgung (73 - 76) zugeordnete Saugelement (61) bzw. Saugelementpaar (71) verbunden ist.

11. Vorrichtung nach einem der Ansprüche 1 bis 10, dadurch gekennzeichnet, daß der Förderer (38, 39) als umlaufende Doppelkette (39) ausgebildet ist, wobei die beiden Ketten (39) übereinander angeordnet sind und diverse, in gleichem Abstand angeordnete Aufnahmeelemente (44) für das Saugelement (61) bzw. das Saugelementpaar (71) aufnehmen.

12. Vorrichtung nach einem der Ansprüche 1 bis 11, dadurch gekennzeichnet, daß eine Einrichtung (31, 32) zum Nachzentrieren des vom jeweiligen Gegenstand (19) aufgenommenen Produkts (29, 30; 3) bezüglich des Gegenstands (19) vorgesehen ist, wobei die Einrichtung (31, 32) zum Nachzentrieren zwei Zentrierelemente (31) aufweist, die auf den entgegengesetzten Seiten des dort offenen Gegenstands (19 in diesen einführbar sind, insbesondere nach dem Drehen des Gegenstands (19).
